# EUROPEAN PATENT SPECIFICATION

(11) **EP 3 222 463 B1**
(45) Date of publication and mention of the grant of the patent: **18.12.2019**
(21) Application number: 17157131.8
(22) Date of filing: 21.02.2017
(51) Int. Cl.: B60P 1/02

(54) **TRAILER**
ANHÄNGER
REMORQUE

(30) Priority: 02.03.2016 GB 201603621; 13.10.2016 GB 201617377
(43) Date of publication of application: 27.09.2017
(73) Proprietor: S. Cartwright & Sons (Coachbuilders) Limited, Altrincham, Cheshire WA14 5EW (GB)
(72) Inventor: CURTIS, Lionel, Northwich, Cheshire, CW8 3NQ (GB)
(74) Representative: Connell, Mark

(56) References cited:
- EP-A1- 1 559 612
- US-A- 5 092 721
- US-A- 5 915 913
- US-A1- 2009 208 315

## Description

The present invention relates to a vehicle body, in particular a vehicle body for a delivery vehicle having a compartment into which goods may be loaded for transportation.

Goods are typically delivered to convenience stores using delivery vehicles with lifting platforms to the rear of and outside the vehicle. The operation of such a lifting platform requires additional operating room in commonly congested areas. External lifting platforms have "working at height" risks associated with them and can rarely provide level access from platform to pavement, where many deliveries have to be made across pedestrian footpaths. Such external lifting platforms and their associated equipment are also a source of undesirable noise in an urban environment.

EP1559612 discloses an articulated heavy goods vehicle comprising a tractor and trailer, the trailer having a trailer body with a front end adjacent the tractor, a rear end, and two side faces extending from the front to the rear of the trailer. Access to the interior of the trailer body is provided by means of openings in both of the sides of the trailer body. The trailer body is further provided with a goods carrier which is movable between a stowed position inside the trailer body, and a loading position in which the base of the goods carrier rests on the ground, and the goods carrier is displaced laterally outwardly of the trailer body.

DE3619124 discloses a delivery vehicle with a vehicle body having a compartment into which goods may be loaded by means of a lifting platform formed from a side wall of the vehicle body. An operating mechanism is provided to pivot portion of the side wall of the vehicle body outwardly of the vehicle into a generally horizontal position to form a loading platform, and then to lower the loading platform to the ground.

NL1020943 also shows a vehicle with a vehicle body having a compartment into which goods may be loaded by means of a lifting platform. In this vehicle, however, the lifting platform is contained in the vehicle body, and moves vertically between a lowered loading/unloading position and a raised transport position. The side of the vehicle body has at least one flap pivotally connected to it at just above ground level, and this may be swung between a raised position in which it at least partially closes the compartment, and a lowered position in which it forms a ramp for use in loading containers into the compartment.

US2009/0208315 discloses a vehicle provided with at least one front axis and at least one rear axis, one vehicle frame and at least one loading box or loading surface which can be raised or lowered in a verticle direction by way of lifting devices, in addition to a loading ramp located in the rear area of the vehicle.

It is an object of the present invention to provide an improved vehicle body for use in a delivery vehicle.

According to a first aspect of the invention we provide a trailer or semi-trailer comprising a pair of ground-engaging wheels mounted on an axle and a vehicle body, the vehicle body having a floor, a front wall, a rear wall and two side walls extending between the front wall and the rear wall, the floor, front, rear and side walls enclosing a load compartment, there being an opening provided in each of the rear wall and at least one of the side walls, the openings providing access to the load compartment, and a lifting mechanism which is operable to move at least a portion of the floor adjacent to the opening in the side wall vertically between a lowered position in which the moved floor is generally level with a lowermost edge of the opening in the side wall, and a raised position in which the moved floor is generally level with a lowermost edge of the opening in the rear wall, wherein the portion of movable floor is located towards the front of the trailer or semi-trailer relative to the wheels, characterised in that the movable portion of the floor extends across substantially the entire width of the vehicle body from one side wall to the other side wall.

According to a second aspect of the invention we provide a vehicle comprising two sets of ground-engaging wheels, each set being mounted on an axle and a vehicle body, the vehicle body having a floor, a front wall, a rear wall and two side walls extending between the front wall and the rear wall, the floor, front, rear and side walls enclosing a load compartment, there being an opening provided in each of the rear wall and at least one of the side walls, the openings providing access to the load compartment, and a lifting mechanism which is operable to move at least a portion of the floor adjacent to the opening in the side wall vertically between a lowered position in which the moved floor is generally level with a lowermost edge of the opening in the side wall, and a raised position in which the moved floor is generally level with a lowermost edge of the opening in the rear wall, wherein the movable portion of the floor is located between the two sets of wheels, characterised in that the movable portion of the floor extends across substantially the entire width of the vehicle body from one side wall to the other side wall.

By moving the floor vertically between its raised and lowered positions, the moved floor does not extend, at any point, outside the envelope of the trailer body (compared to the movable goods carrier disclosed in EP1559612, for example). The invention is therefore, particularly suitable for use where space outside the vehicle body is limited.

The vehicle body may be provided with a side door which is movable between a closed position in which it at least partially closes the opening in the side wall and an open position in which the door does not impede access to the load compartment via the opening in the side wall.

The vehicle body may be provided with a rear door which is movable between a closed position in which it at least partially closes the opening in the rear wall and an open position in which the door does not impede access to the load compartment via the opening in the rear wall.

The rear and/or side door may be pivotally mounted on the vehicle body so that it pivots about a pivot axis.

In this case, the rear and/or side door may pivot between the open and closed positions about a generally vertical axis.

The rear and/or side door may be pivotally mounted on the vehicle body by means of a hinge.

The rear and/or side door may be mounted on the vehicle body by means of a support arm which has a first arm which is pivotally connected to the vehicle body, and a second end which is pivotally connected to the door.

The rear and/or side door may comprise a roller shutter. In this case, the door may be rolled around a generally horizontal axis when moving between its open and closed positions.

The rear and/or side door may be provided with a pantographic hinge which is operable to move the door between its open and closed positions.

An opening may be provided in both side walls of the vehicle body.

In embodiments whereby the invention is a trailer or semi-trailer, the trailer or semi-trailer may further include a coupling whereby the trailer or semi-trailer may be coupled to a tractor, the movable portion of floor being located between the coupling and the wheels.

Embodiments of the invention will now be described, by way of example only, with reference to the accompanying drawings of which
FIGURE 1 shows a side view of a semi-trailer having a vehicle body according to the first aspect of the invention as the vehicle body is being loaded,
FIGURE 2 shows a rear view of the semi-trailer illustrated in Figure 1,
FIGURE 3 shows a side view of an alternative embodiment of semi-trailer having a vehicle body according to the first aspect of invention when the semi trailer is ready for unloading,
FIGURE 4 shows a rear view of the semi-trailer illustrated in Figure 3,
FIGURE 5 shows an illustration of a rear view of the semi-trailer illustrated in Figure 3 whilst being unloaded,
FIGURE 6 shows a cut-away perspective view of alternative embodiment of semi-trailer having a vehicle body according to the first aspect of invention, with the movable floor portion in its raised position, and
FIGURE 7 shows a cut-away perspective view of the semi-trailer illustrated in Figure 7 with the movable floor portion in its lowered postion.

Referring now to the figures, there is shown a vehicle body 10 having a floor 12, a front wall 14, a rear wall 16 and two side walls 18, 20 extending between the front wall and the rear wall. The vehicle body may be mounted at the rear of a vehicle, or may be part of a trailer or semi-trailer in an articulated vehicle comprising a tractor and trailer or semi-trailer. In the embodiment illustrated in the figures, the vehicle body 10 is mounted on a semi-trailer having a pair of ground-engaging wheels 21 mounted on a single axle. It will be appreciated, however, that the semi-trailer may have wheels on more then one axle (up to three axles, for example)

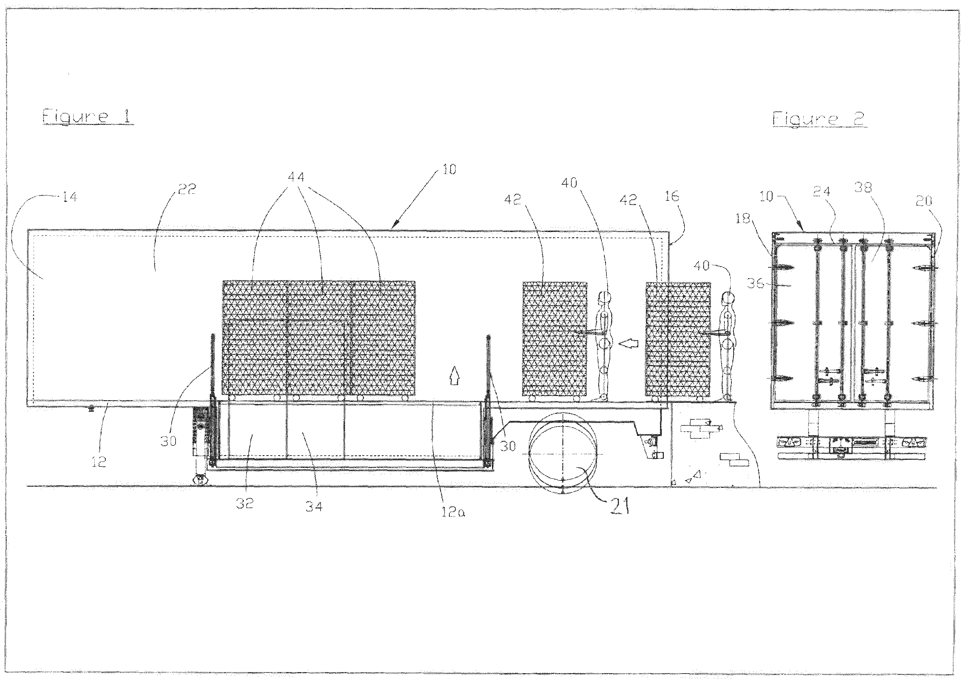

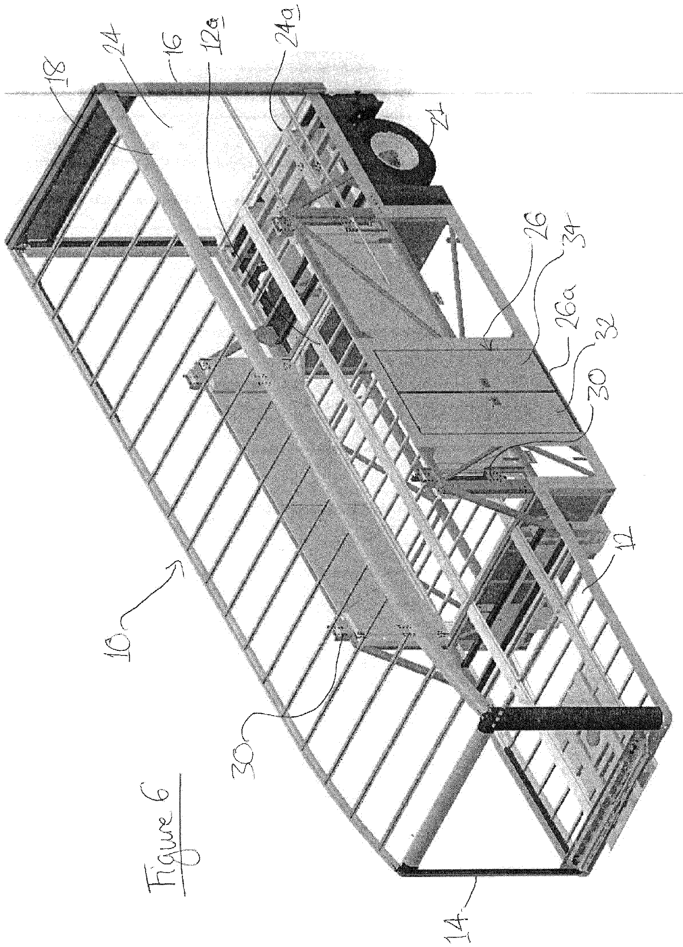

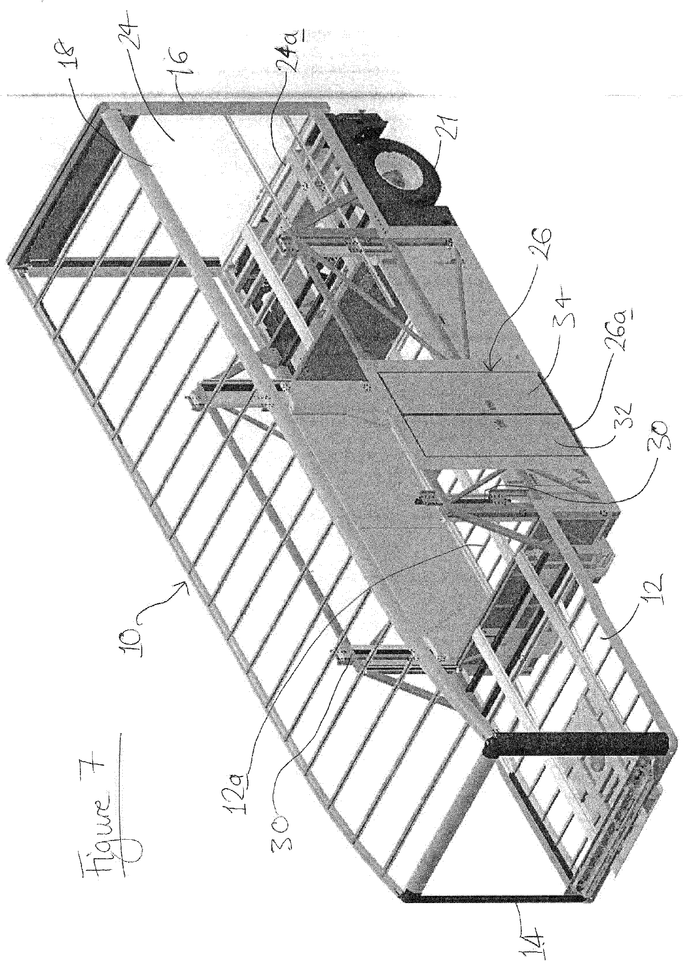

The floor 12, front wall 14, rear wall 16 and side walls 18, 20 enclose a load compartment 22, which in this embodiment is a cuboidal space. There is a rear opening 24 provided in the rear wall 16 and in the embodiments illustrated in Figures 1 to 5, a side opening 26, 28 is provided in each of the side walls 18, 20. In the embodiment illustrated in Figures 6 and 7, there is a side opening 26 in one side wall 18 only. The openings 24, 26, 28 providing access to the load compartment 22.

There is also a lifting mechanism 30 which is operable to move a portion of the floor 12a adjacent to the side openings 26, 28 vertically between a lowered position in which the moving floor portion 12a is generally level with a lowermost edges 26a, 28a of the side openings 26, 28, and a raised position in which the moving floor portion 12a is generally level with a lowermost edges 24a of the rear opening 24. The lifting mechanism 30 may include a plurality of direct-acting hydraulic rams, ropes and pulleys, screw jacks or any other conventional linear actuator.

In this example, only a portion 12a of the floor is movable so that the moving floor portion 12, when moved vertically downwards, does not interfere with the ground engaging wheels 21 of the vehicle / trailer / semi-trailer on which the vehicle body 10 is, in use, mounted. In the example illustrated in the Figures, the vehicle body 10 is mounted on a semi-trailer, and the moving floor portion 12a is located towards the front of the vehicle body 10 relative to the wheels 21, i.e. between the ground engaging wheels 21 and the coupling by means of which the semi-trailer is connected to the fifth wheel of a tractor. Where the vehicle body 10 is mounted on a vehicle or trailer with two sets of ground engaging wheels 21 which are spaced from one another along the length of the vehicle, the moving floor portion 12a is advantageously located between the two spaced sets of wheels.

The moving floor portion 12a extends across substantially the entire width of the vehicle body 10 from one side wall 18 to the other 20. This is best illustrated in Figures 6 and 7.

In this embodiment, the lowermost edges 26, 28a of the side openings 26, 28 are lower than the lowermost edge 24a of the rear opening 24. Although not essential, in this advantageous embodiment, the height of the lowermost edge 24a of the rear opening 24 relative to the ground is generally the same as the height of a conventional loading bay used for the rear loading of such vehicles.

Moreover, the height of the lowermost edges 26a, 28a of the side openings 26, 28 is generally the same as the height of a conventional raised pavement relative to the adjacent road.

The vehicle body 10 may therefore be loaded through the rear opening 24 directly from a loading bay as illustrated in Figure 1. During loading, the moving floor portion 12a is in its raised position. Figure 1 shows a person 40 pushing a wheeled goods container 42 into the load compartment 22 via the rear opening 24 to join other wheeled goods containers 44 position on the moving floor portion 12a.

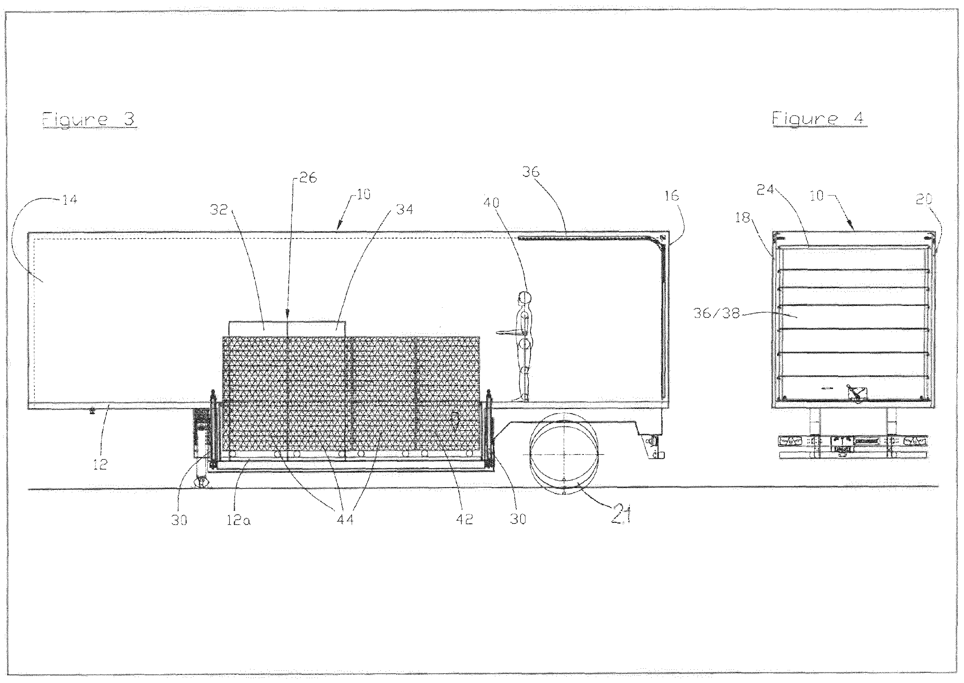

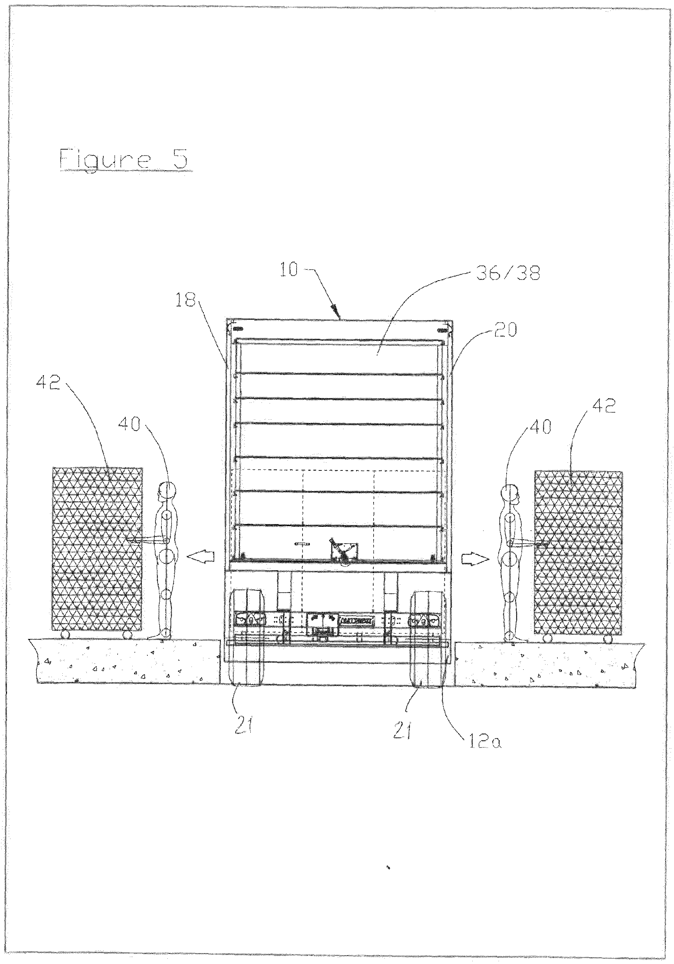

To unload the vehicle, the vehicle is parked with the vehicle body 10 generally parallel to the pavement, and the moving floor portion 12a bearing the wheeled goods containers 44 is moved vertically downwardly to its lowered position. This is illustrated in Figure 3. The wheeled goods containers 42, 44 may then be wheeled out of the load compartment 22, through the side opening 26, 28 directly adjacent to the pavement and onto the adjacent pavement as illustrated in Figure 5.

The invention thus provides for loading from conventional height loading docks through the rear of the trailer and for unloading directly onto footpath which is next to the vehicle when the vehicle is parked parallel to the pavement.

Advantageously, each opening 26, 28 in the side of the vehicle body 10 is provided with a side door 32, 34 which is movable between a closed position in which it at least partially closes the side opening 26, 28 in the respective side wall 18, 20 and an open position in which the side door 32, 34 does not impede access to the load compartment 22 via the side opening 26, 28 in the side wall 18, 20.

In the embodiment of the invention illustrated in the Figures, a pair of vertically hinged side doors 32, 34 are provided to close each side opening 26, 28.

Each side door 32, 34 has a generally vertical first edge 32a, 34a which is connected to an adjacent generally vertical edge of the side wall 18, 20 surrounding the side opening 26, 28 by means of one or more hinges. The side doors 32, 34 therefore pivot between the open and closed positions about a generally vertical axis

When the side doors 32, 34 are in their closed positions, generally vertical second edges 32b, 34b of the side doors 23, 34 meet at a position generally centrally of the side opening 24, 26 to close the side opening 24, 26.

In these embodiments, the vehicle body 10 is also provided with a rear door which is movable between a closed position in which it at least partially closes the opening in the rear wall and an open position in which the door does not impede access to the load compartment via the opening in the rear wall.

As with the side doors 32, 34, in the embodiment of the invention illustrated in Figures 1 and 2, two vertically hinged rear doors 36, 38 are provided to close the rear opening 24. Each rear door 36, 38 has a generally vertical first edge 36a, 38a which is connected to an adjacent generally vertical edge of the rear wall 16 surrounding the rear opening 24 by means of one or more hinges. The rear doors 36, 38 therefore pivot between the open and closed positions about a generally vertical axis.

When the rear doors 36, 38 are in their closed positions, generally vertical second edges 36b, 38b of the rear doors 26, 38 meet at a position generally centrally of the rear opening 24 to close the rear opening 24.

Advantageously, when the side and rear doors 32, 34, 36, 38 move from their closed positions to their open positions, they do so by swinging outwardly of the vehicle body 10 so as not to be impeded by any goods in the load compartment 22. It will be appreciated, however, that when the vehicle body 10 is parked in a confined space, the doors 32, 34, 36, 38, when open could provide an unwanted obstruction to movement outside the vehicle body 10. To minimise or avoid this problem, alternative configurations of door could be used.

For example, the rear and/or side doors 32, 34, 36, 38 may be mounted on the vehicle in such a way that, during movement between the open and closed positions, the first edge of the door 32, 34, 36, 38 moves away from the adjacent generally vertical edge of the opening 24, 26, 28 whilst the second edge of the door 32, 34, 36, 38 moves towards the edge of the opening 24, 26, 28. This can be achieved by mounting the rear and/or side doors 32, 34, 36, 38 on the vehicle body 10 by means of a support arm which has a first end which is pivotally connected to the vehicle body, and a second end which is pivotally connected to the door 32, 34, 36, 38.

A track and runner arrangement may also be provided to ensure that the second edge of the door 32, 34, 36, 38 moves in a generally straight line generally parallel to the plane of the opening 24, 26, 28 as the door 32, 34, 36, 38 moves between the open and closed positions. For example, the runner may comprise a roller which extends upwardly from the uppermost generally horizontal edge of the door 32, 34, 36, 38 into a corresponding track which extends along the uppermost edge of the opening 24, 26, 28. The runner may be located at the uppermost end of the second edge 32b, 34b, 26b, 38b of the door 32, 34, 36, 38. An example of such a door is described in more detail in our co-pending patent application GB1602097.6.

Alternatively, one or more of the doors 32, 34, 36, 38 could be a plug door moved between its open and closed positions by means of a vertical axis pantographic hinge mechanism. Such doors are known to be provided on buses and coaches.

As a further alternative, the side and/or rear doors may comprise a roller shutter. In the embodiments of the invention illustrated in Figures 3, 6 and 7 the rear door 40 is a roller shutter which is rolled around a generally horizontal axis when moving between its open and closed positions. Such roller shutters are well known to those skilled in the art.

The rear and/or side doors 32, 34, 36, 38 may be opened and closed manually, or may be provided with a controlled powered opening mechanism to further improve ease of use.

When used in this specification and claims, the terms "comprises" and "comprising" and variations thereof mean that the specified features, steps or integers are included. The terms are not to be interpreted to exclude the presence of other features, steps or components.

## Claims

1. A trailer or semi-trailer comprising a pair of ground-engaging wheels (21) mounted on an axle and a vehicle body (10), the vehicle body having a floor (12), a front wall (14), a rear wall (16) and two side walls (18, 20) extending between the front wall and the rear wall, the floor, front, rear and side walls enclosing a load compartment (22), there being an opening (24, 26, 28) provided in each of the rear wall and at least one of the side walls, the openings providing access to the load compartment, and a lifting mechanism (30) which is operable to move at least a portion of the floor (12a) adjacent to the opening in the side wall vertically between a lowered position in which the moved floor is generally level with a lowermost edge (26a, 28a) of the opening in the side wall, and a raised position in which the moved floor is generally level with a lowermost edge (24a) of the opening in the rear wall, wherein the portion of movable floor is located towards the front of the trailer or semi-trailer relative to the wheels, **characterised in that** the movable portion of the floor extends across substantially the entire width of the vehicle body from one side wall to the other side wall.

2. A trailer or semi-trailer according to claim 1 wherein the vehicle body is provided with a side door (32, 34) which is movable between a closed position in which it at least partially closes the opening in the side wall and an open position in which the door does not impede access to the load compartment via the opening in the side wall.

3. A trailer or semi-trailer according to any preceding claim wherein the vehicle body is provided with a rear door (36, 38) which is movable between a closed position in which it at least partially closes the opening in the rear wall and an open position in which the door does not impede access to the load compartment via the opening in the rear wall.

4. A trailer or semi-trailer according to any preceding claim wherein an opening is provided in both side walls of the vehicle body.

5. A trailer or semi-trailer according to any preceding claim further comprising a coupling whereby the trailer or semi-trailer may be coupled to a tractor, the portion of movable floor being located between the coupling and the ground-engaging wheels.

6. A vehicle comprising two sets of ground-engaging wheels (21), each set being mounted on an axle and a vehicle body (10), the vehicle body having a floor (12), a front wall (14), a rear wall (16) and two side walls (18, 20) extending between the front wall and the rear wall, the floor, front, rear and side walls enclosing a load compartment (22), there being an opening (24, 26, 28) provided in each of the rear wall and at least one of the side walls, the openings providing access to the load compartment, and a lifting mechanism (30) which is operable to move at least a portion of the floor (12a) adjacent to the opening in the side wall vertically between a lowered position in which the moved floor is generally level with a lowermost edge (26a, 28a) of the opening in the side wall, and a raised position in which the moved floor is generally level with a lowermost edge (24a) of the opening in the rear wall, wherein the movable portion of the floor is located between the two sets of wheels, **characterised in that** the movable portion of the floor extends across substantially the entire width of the vehicle body from one side wall to the other side wall.

7. A vehicle according to claim 6 wherein the vehicle body is provided with a side door (32, 34) which is movable between a closed position in which it at least partially closes the opening in the side wall and an open position in which the door does not impede access to the load compartment via the opening in the side wall.

8. A vehicle according to any one of claims 6 or 7 wherein the vehicle body is provided with a rear door (36, 38) which is movable between a closed position in which it at least partially closes the opening in the rear wall and an open position in which the door does not impede access to the load compartment via the opening in the rear wall.

9. A vehicle according to any one of claims 6 to 8 wherein an opening is provided in both side walls of the vehicle body.

## Patentansprüche

1. Anhänger oder Sattelanhänger umfassend ein Paar bodenberührende Räder (21), die auf einer Achse montiert sind, und einen Fahrzeugaufbau (10), wobei der Fahrzeugaufbau einen Boden (12), eine Vorderwand (14), eine Rückwand (16) und zwei Seitenwände (18, 20) mit Erstreckung zwischen der Vorderwand und der Rückwand aufweist, wobei der Boden, die Vorder-, Hinter- und Seitenwände einen Laderaum (22) umschließen, eine Öffnung (24, 26, 28) in jeder der Rückwand und mindestens einer der Seitenwände vorgesehen ist, wobei die Öffnungen den Zugang zum Laderaum vorsehen, und einen Hebemechanismus (30), der betreibbar ist, um mindestens einen Abschnitt des Bodens (12a) neben der Öffnung in der Seitenwand vertikal zwischen einer abgesenkten Position, in der der bewegte Boden allgemein höhengleich mit einer untersten Kante (26a, 28a) der Öffnung in der Seitenwand ist, und einer angehobenen Position, in der der bewegte Boden allgemein höhengleich mit einer untersten Kante (24a) der Öffnung in der Rückwand ist, zu bewegen, wobei der bewegbare Bodenabschnitt hin zur Vorderseite des Anhängers oder Sattelanhängers relativ zu den Rädern befindlich ist, **dadurch gekennzeichnet, dass** sich der bewegbare Abschnitt des Bodens im Wesentlichen über die gesamte Breite des Fahrzeugaufbaus von einer Seitenwand zur anderen Seitenwand erstreckt.

2. Anhänger oder Sattelanhänger nach Anspruch 1, wobei der Fahrzeugaufbau mit einer Seitentür (32, 34) versehen ist, die zwischen einer geschlossenen Position, in der sie mindestens teilweise die Öffnung in der Seitenwand schließt, und einer offenen Position, in der die Tür nicht den Zugang zum Laderaum über die Öffnung in der Seitenwand behindert, bewegbar ist.

3. Anhänger oder Sattelanhänger nach einem vorhergehenden Anspruch, wobei der Fahrzeugaufbau mit einer Hintertür (36, 38) versehen ist, die zwischen einer geschlossenen Position, in der sie mindestens teilweise die Öffnung in der Rückwand schließt, und einer offenen Position, in der die Tür nicht den Zugang zum Laderaum über die Öffnung in der Rückwand behindert, bewegbar ist.

4. Anhänger oder Sattelanhänger nach einem vorhergehenden Anspruch, wobei eine Öffnung in beiden Seitenwänden des Fahrzeugaufbaus vorgesehen ist.

5. Anhänger oder Sattelanhänger nach einem vorhergehenden Anspruch, ferner umfassend eine Kupplung, wodurch der Anhänger oder Sattelanhänger an eine Zugmaschine gekuppelt sein kann, wobei der bewegbare Bodenabschnitt zwischen der Kupplung und den bodenberührenden Rädern befindlich ist.

6. Fahrzeug, umfassend zwei Sätze von bodenberührenden Rädern (21), wobei jeder Satz auf einer Achse montiert ist, und einen Fahrzeugaufbau (10), wobei der Fahrzeugaufbau einen Boden (12), eine Vorderwand (14), eine Rückwand (16) und zwei Seitenwände (18, 20) mit Erstreckung zwischen der Vorderwand und der Rückwand aufweist, wobei der Boden, die Vorder-, Hinter- und Seitenwände einen Laderaum (22) umschließen, eine Öffnung (24, 26, 28) in jeder der Rückwand und mindestens einer der Seitenwände vorgesehen ist, wobei die Öffnungen den Zugang zum Laderaum vorsehen, und einen Hebemechanismus (30), der betreibbar ist, um mindestens einen Abschnitt des Bodens (12a) neben der Öffnung in der Seitenwand vertikal zwischen einer abgesenkten Position, in der der bewegte Boden allgemein höhengleich mit einer untersten Kante (26a, 28a) der Öffnung in der Seitenwand ist, und einer angehobenen Position, in der der bewegte Boden allgemein höhengleich mit einer untersten Kante (24a) der Öffnung in der Rückwand ist, zu bewegen, wobei sich der bewegbare Abschnitt des Bodens zwischen den beiden Radsätzen befindet, **dadurch gekennzeichnet, dass** sich der bewegbare Abschnitt des Bodens im Wesentlichen über die gesamte Breite des Fahrzeugaufbaus von einer Seitenwand zur anderen Seitenwand erstreckt.

7. Fahrzeug nach Anspruch 6, wobei der Fahrzeugaufbau mit einer Seitentür (32, 34) versehen ist, die zwischen einer geschlossenen Position, in der sie mindestens teilweise die Öffnung in der Seitenwand schließt, und einer offenen Position, in der die Tür nicht den Zugang zum Laderaum über die Öffnung in der Seitenwand behindert, bewegbar ist.

8. Fahrzeug nach einem der Ansprüche 6 oder 7, wobei der Fahrzeugaufbau mit einer Hintertür (36, 38) versehen ist, die zwischen einer geschlossenen Position, in der sie mindestens teilweise die Öffnung in der Rückwand schließt, und einer offenen Position, in der die Tür nicht den Zugang zum Laderaum über die Öffnung in der Rückwand behindert, bewegbar ist.

9. Fahrzeug nach einem der Ansprüche 6 bis 8, wobei eine Öffnung in beiden Seitenwänden des Fahrzeugaufbaus vorgesehen ist.

## Revendications

1. Remorque ou semi-remorque comprenant une paire de roues en contact avec le sol (21) montée sur un essieu et un corps de véhicule (10), le corps de véhicule ayant un plancher (12), une paroi avant (14), une paroi arrière (16) et deux parois latérales (18, 20) s'étendant entre la paroi avant et la paroi arrière, le plancher, les parois avant, arrière et latérales renfermant un compartiment de chargement (22), où se trouve une ouverture (24, 26, 28) fournie dans la paroi arrière et au moins une des parois latérales, les ouvertures fournissant l'accès au compartiment de chargement, et un mécanisme de levage (30) qui peut être actionné pour déplacer au moins une partie du plancher (12a) adjacente à l'ouverture dans la paroi latérale verticalement entre une position abaissée dans laquelle le plancher déplacé est généralement de niveau avec un bord le plus bas (26a, 28a) de l'ouverture dans la paroi latérale, et une position élevée dans laquelle le plancher déplacé est généralement de niveau avec un bord le plus bas (24a) de l'ouverture dans la paroi arrière, dans laquelle la partie de plancher mobile est située vers l'avant de la remorque ou semi-remorque par rapport aux roues, **caractérisé en ce que** la partie mobile du plancher s'étend sensiblement sur la totalité de la largeur du corps de véhicule d'une paroi latérale à l'autre paroi latérale.

2. Remorque ou semi-remorque selon la revendication 1, dans laquelle le corps de véhicule est muni d'une porte latérale (32, 34) qui peut être déplacée entre une position fermée dans laquelle elle ferme au moins partiellement l'ouverture dans la paroi latérale et une position ouverte dans laquelle la porte n'empêche pas l'accès au compartiment de chargement via l'ouverture dans la paroi latérale.

3. Remorque ou semi-remorque selon l'une quelconque des revendications précédentes, dans laquelle le corps de véhicule est muni d'une porte arrière (36, 38) qui peut être déplacée entre une position fermée dans laquelle elle ferme au moins partiellement l'ouverture dans la paroi arrière et une position ouverte dans laquelle la porte n'empêche pas l'accès au compartiment de chargement via l'ouverture dans la paroi arrière.

4. Remorque ou semi-remorque selon l'une quelconque des revendications précédentes, dans laquelle une ouverture est fournie dans les deux parois latérales du corps de véhicule.

5. Remorque ou semi-remorque selon l'une quelconque des revendications précédentes comprenant en outre un accouplement grâce à quoi la remorque ou semi-remorque peut être accouplée à un tracteur, la partie de plancher mobile étant située entre l'accouplement et les roues en contact avec le sol.

6. Véhicule comprenant deux ensembles de roues en contact avec le sol (21), chaque ensemble étant monté sur un essieu et un corps de véhicule (10), le corps de véhicule ayant un plancher (12), une paroi avant (14), une paroi arrière (16) et deux parois latérales (18, 20) s'étendant entre la paroi avant et la paroi arrière, le plancher, les parois avant, arrière et latérales renfermant un compartiment de chargement (22), où se trouve une ouverture (24, 26, 28) fournie dans la paroi arrière et au moins une des parois latérales, les ouvertures fournissant l'accès au compartiment de chargement, et un mécanisme de levage (30) qui peut être actionné pour déplacer au moins une partie du plancher (12a) adjacente à l'ouverture dans la paroi latérale verticalement entre une position abaissée dans laquelle le plancher déplacé est généralement de niveau avec un bord le plus bas (26a, 28a) de l'ouverture dans la paroi latérale, et une position élevée dans laquelle le plancher déplacé est généralement de niveau avec un bord le plus bas (24a) de l'ouverture dans la paroi arrière, dans laquelle la partie mobile du plancher est située entre les deux ensembles de roues, **caractérisé en ce que** la partie mobile du plancher s'étend sensiblement sur la totalité de la largeur du corps de véhicule d'une paroi latérale à l'autre paroi latérale.

7. Véhicule selon la revendication 6, dans laquelle le corps de véhicule est muni d'une porte latérale (32, 34) qui peut être déplacée entre une position fermée dans laquelle elle ferme au moins partiellement l'ouverture dans la paroi latérale et une position ouverte dans laquelle la porte n'empêche pas l'accès au compartiment de chargement via l'ouverture dans la paroi latérale.

8. Véhicule selon l'une quelconque des revendications 6 ou 7, dans laquelle le corps de véhicule est muni d'une porte arrière (36, 38) qui peut être déplacée entre une position fermée dans laquelle elle ferme au moins partiellement l'ouverture dans la paroi arrière et une position ouverte dans laquelle la porte n'empêche pas l'accès au compartiment de chargement via l'ouverture dans la paroi arrière.

9. Véhicule selon l'une quelconque des revendications 6 à 8, dans laquelle une ouverture est fournie dans les deux parois latérales du corps de véhicule.
